# EUROPEAN PATENT SPECIFICATION

(11) **EP 4 257 241 B1**
(45) Date of publication and mention of the grant of the patent: **14.01.2026**
(21) Application number: 23734131.8
(22) Date of filing: 16.01.2023
(51) Int. Cl.: B02C 25/00, B02C 18/14, B02C 18/18, B02C 18/22, B02C 18/24, B02C 18/30, B02C 18/36, B02C 19/00, B29B 7/58, B29B 9/12

(54) **MICRONIZING APPARATUS FOR HYDROGEL OF SUPER ABSORBENT POLYMER**
VORRICHTUNG ZUR MIKRONISIERUNG VON HYDROGEL AUS SUPERABSORBIERENDEM POLYMER
APPAREIL DE MICRONISATION D'HYDROGEL DE POLYMÈRE SUPERABSORBANT

(30) Priority: 07.02.2022 KR 20220015673
(43) Date of publication of application: 11.10.2023
(73) Proprietor: LG Chem, Ltd., Yeoui-daero, Youngdungpo-gu Seoul 07336 (KR)
(72) Inventor: CHIN, Ho Young, Daejeon 34122 (KR); JUNG, Young Cheol, Daejeon 34122 (KR); JO, Yeong Bin, Daejeon 34122 (KR); KIM, Jong Seok, Daejeon 34122 (KR)
(74) Representative: Plasseraud IP
(86) International application number: PCT/KR2023/000736
(87) International publication number: WO 2023/149681

(56) References cited:
- WO-A1-2021/054564
- WO-A1-2021/054564
- WO-A1-2021/075921
- JP-A- 2010 051 857
- JP-A- H10 137 615
- KR-A- 20160 048 842
- KR-A- 20210 062 459

## Description

### [Technical Field]

The present disclosure relates to a micronizing apparatus for hydrogel of super absorbent polymer, and more specifically, to a micronizing apparatus for hydrogel of super absorbent polymer that sequentially cut hydrogel with a first cutter and a second cutter to reduce generation of fine particles, thereby improving properties.

### [Background]

Super absorbent polymer (SAP) is polymer material in the form of white powder prepared by reacting acrylic acid with caustic soda, and it can absorb moisture of about five hundred to thousand times of its own weight. The super absorbent polymer is synthetic polymer material that is transformed to a jelly-like form, if it absorbs water, and can store water without discharging, even if a certain degree of pressure is applied from the outside.

Super absorbent polymer molecules have a network structure, and due to many pores between the molecules, easily absorb water. Due to concentration difference between ions in the super absorbent polymer and water, water moves inside super absorbent polymer (by osmosis). If water molecules are introduced inside super absorbent polymer, anions fixed inside try to occupy a specific space by repulsive force, and thus, the space of polymer chains expands and more water can be absorbed (electrostatic repulsion).

Such super absorbent polymer began to be commercialized as sanitary items, and currently, is being widely used as water-holding material for soil, water stop material for civil engineering and architecture, sheets for raising seedling, freshness preservatives in the field of food circulation, fomentation material, and the like, besides hygiene products such as paper diapers for children, and the like.

Super absorbent polymer is marketed as powder products after chopping, drying, grinding, classifying and surface treatment of hydrogel or hydrogel polymer obtained through a polymerization reaction. Wherein, during cutting, grinding and powderization of dried polymer, fine particles having a particle size of about 150 µm or less may be generated. Since super absorbent polymer comprising the fine particles may exhibit deteriorated properties, the fine particles are reassembled with water and then introduced in a chopping process to productize. However, the general properties of reassembled fine particles are inferior to super absorbent polymer after a polymerization reaction, and thus, the properties of the whole product may be degraded. Further, as generation of fine particles increases, process load may increase and productivity may be lowered.

KR 2021 0062459 A discloses a complex minute cutting apparatus for super absorbent polymer hydrous gel to achieve smooth cutting and reduced particle size. Said apparatus includes a barrel body, a conveying member installed in the barrel body, and a plurality of cutting modules installed in the conveying member to crush and discharge a hydrogel to the outside. The cutting module includes a cutter member that crushes the hydrogel conveyed by the conveying member, and a plate with many holes that discharges the hydrogel crushed by the cutter member.

WO 2021/054564 A1 discloses a minute cutting apparatus for super absorbent polymer hydrous gel capable of uniform cutting of the hydrous gel. Said apparatus includes a first barrel body extending in a first direction, a first conveying member installed in the first barrel body, a second barrel body extending from a side of the first barrel body in a second direction intersecting the first direction, a second conveying member installed in the second barrel body, a cutter member installed in the second barrel body to crush the hydrous gel; and a plate with many holes that discharges the hydrous gel particles crushed by the cutter member to the outside of the first barrel body, wherein the second barrel body is rotatably installed in the first barrel body, and a flexible cover member is installed around a connection position between the first barrel body and the second barrel body.

The background part has been described for better understanding of the background of the invention, and may comprise information other than prior art already known to one of ordinary knowledge in the art.

### [Disclosure of Invention]

### [Technical Problem]

It is an object of the invention to provide a micronizing apparatus for hydrogel of super absorbent polymer that can minimize loss of hydrogel particles due to aggregation by using a first cutter rotating at a speed proportional to transfer speed of hydrogel, and a second cutter rotating at a speed proportional to collision number with hydrogel per unit time, and thus, can not only reduce generation of fine particles, but also miniaturize particles.

### [Technical Solution]

The invention relates to a micronizing apparatus for hydrogel of super absorbent polymer as defined in the appended claims, comprising a body supplied with hydrogel or reassembled hydrogel through a hopper formed at one side, and having a transfer space formed inside for transferring the supplied hydrogel to the other side; a first rotation shaft rotatably disposed in the transfer space, and having a screw formed on an outer circumferential surface so as to transfer the hydrogel from the one side to the other side; a pre-cutter fixedly installed to the body at the other side of the screw, and having a plurality of pre-cutter holes through which the hydrogel transferred by the screw passes; a first cutter rotatably disposed at the other side of the pre-cutter in the body, and connected to the first rotation shaft so as to rotate together with the first rotation shaft and primarily cut the hydrogel having passed through the pre-cutter holes; a first hole plate fixedly installed to the body at the other side of the first cutter, and having a plurality of first through-holes through which the hydrogel primarily cut by the first cutter passes; a second rotation shaft co-axially disposed with the first rotation shaft, and disposed so as to be rotatable independently from the first rotation shaft; a second cutter rotatably disposed at the other side of the first hole plate in the body, and connected to the second rotation shaft so as to rotate together with the second rotation shaft and secondarily cut the hydrogel having passed through the first through-holes; and a second hole plate fixedly installed to the body at the other side of the second cutter, and having a plurality of second through-holes through which the hydrogel secondarily cut by the second cutter passes.

The micronizing apparatus for hydrogel of super absorbent polymer may further include: a first driving motor transferring a driving force to the first rotation shaft; and a second driving motor transferring a driving force to the second rotation shaft.

The first driving motor may be disposed at one side of the body such that the first rotation shaft may penetrate through the surface of the one side of the body and be connected to the first driving motor, and the second driving motor may be disposed at the other side of the body such that the second rotation shaft may penetrate through the surface of the other side of the body and be connected to the second driving motor.

A rotation speed of the second rotation shaft may be greater than a rotation speed of the first rotation shaft.

In one example, the rotation speed of the first rotation shaft may be 100rpm ~ 300rpm, and the rotation speed of the second rotation shaft may be 1000rpm ~ 1750rpm.

A diameter of the second through-hole may be equal to or less than a diameter of the first through-hole.

In one example, the diameter of the first through-hole may be 3mm ~ 20mm, and the diameter of the second through-hole may be 3mm ~ 16mm.

A thickness of the second hole plate is smaller than a thickness of the first hole plate.

In order to reinforce rigidity of the second hole plate, the second hole plate may be equipped with at least one rib.

In one example, the thickness of the first hole plate may be 7mm ~ 35mm, and the thickness of the second hole plate may be 3mm ~ 10mm.

In another example, the sum of the thickness of the second through hole and the thickness of the rib may be equal to the thickness of the second hole plate.

### [Advantageous Effects]

According to the embodiment of the invention, by using a first cutter rotating at a relatively slow speed proportional to transfer speed of hydrogel, and a second cutter rotating at a relatively rapid speed proportional to collision number with hydrogel per unit time, loss of hydrogel particles due to aggregation may be minimized, and simultaneously, hydrogel particles may be miniaturized and generation of fine particles may be reduced.

Namely, by controlling the rotation speed of the first cutter slow and controlling the rotation speed of the second cutter rapid, not only accumulation of hydrogel in the cutting part may be prevented, but also the collision number of hydrogel with the second cutter may be increased. Thereby, aggregation of hydrogel particles may be inhibited, and only the collision number of hydrogel with the second cutter may be increased.

Further, since generation of fine particles may be reduced, productivity may be improved.

Moreover, by disposing a pre-cutter at the upstream of the cutting part, rotating components from transferred hydrogel may be decreased. Thereby, cutting of hydrogel may be progressed in a controlled way.

Besides, effects that can be obtained or expected from the examples of the invention will be directly disclosed or suggested in the detailed explanations of the embodiments of the invention. Namely, various effects expected according to the examples of the invention will be disclosed in the detailed description described later.

### [Brief Description of Drawings]

The embodiments of the invention will be better understood referring to the explanations below in relation to attached drawings where similar numeral references indicate identical or functionally similar elements.
Fig. 1 is a cross sectional view of a micronizing apparatus for hydrogel of super absorbent polymer according to the embodiment of the invention.
Fig. 2 is a front view of a pre-cutter used in the micronizing apparatus for hydrogel of super absorbent polymer according to the embodiment of the invention.
Fig. 3 is a side view of a first hole plate used in the micronizing apparatus for hydrogel of super absorbent polymer according to the embodiment of the invention.
Fig. 4 is a front view of the first hole plate shown in Fig. 3.
Fig. 5 is a side view of a second hole plate used in the micronizing apparatus for hydrogel of super absorbent polymer according to the embodiment of the invention.
Fig. 6 is a front view of the second hole plate shown in Fig. 5.

It should be understood that the drawings referred to above are not necessarily drawn to scale, and present simple expressions of various preferred characteristics illustrating the basic principle of the invention. For example, specific design characteristics comprising specific dimensions, directions, locations and shapes will be partly determined by specifically intended application and use environments.

### [Best Mode for Carrying Out the Invention]

The terms used herein are only to explain specific embodiments, and are not intended to limit the invention. A singular expression includes a plural expression thereof, unless it is expressly stated or obvious from the context that such is not intended. As used herein, the terms "comprise", "comprising", "contains", "containing", etc. are intended to designate the existence of practiced characteristic, number, step, constructional element or combinations thereof, and they are not intended to preclude the possibility of existence or addition of one or more other characteristics, numbers, steps, constructional elements or combinations thereof. As used herein, the term "and/or" includes one of enumerated items in connection, or all the combinations.

As used herein, the term "polymer" means a polymerized state of water soluble ethylenically unsaturated monomers, and it may include those of all moisture content ranges or particle diameter ranges. Among the polymers, polymer after polymerization and before drying, and having a moisture content of about 40 wt% or more, may be referred to as hydrogel polymer.

Further, the term "super absorbent polymer" means the polymer or base resin itself, or is used to include the polymer or base resin made appropriate for productization through additional process, for example, surface crosslinking, fine particles reassembling, drying, grinding, classification, and the like.

The micronizing apparatus for hydrogel of super absorbent polymer according to the invention may conduct the first and second micronizing steps at a time, using the first cutter and second cutter rotating at different speeds. Further, since the rotation speed of the first cutter is a relatively slow speed proportional to transfer speed of hydrogel, and the rotation speed of the second cutter is a relatively rapid speed proportional to collision number of hydrogel per unit time, hydrogel particles may be miniaturized and generation of fine particles may be reduced while minimizing damage of hydrogel particles due to aggregation. Further, by disposing a pre-cutter at the upstream of a cutting part, rotating components may be reduced from hydrogel transferred while rotating. Thus, micronization of hydrogel may be progressed in a controlled way.

Hereinafter, the micronizing apparatus for hydrogel of super absorbent polymer according to embodiment of the invention will be explained in detail referring to attached drawings.

The preparation apparatus of super absorbent polymer according to embodiment of the invention comprises a polymerization reactor, a micronizing apparatus, a dryer, a grinding apparatus, and a surface crosslinking apparatus.

The polymerization reactor induces a polymerization reaction of a monomer composition in the presence of an internal crosslinking agent and a polymerization initiator to form hydrogel polymer.

The polymerization reaction is a reaction of forming hydrogel polymer, wherein a monomer composition comprising water soluble ethylenically unsaturated monomers having acid groups, an internal crosslinking agent and a polymerization initiator is subjected to polymerization, to form polymer in which the water soluble ethylenically unsaturated monomers having acid groups and internal crosslinking agent are crosslinked.

The water soluble ethylenically unsaturated monomers making up the crosslinked polymer may be any monomers commonly used in the preparation of super absorbent polymer. As non-limiting examples, the water soluble ethylenically unsaturated monomers may be a compound represented by the following Chemical Formula 1:

[Chemical Formula 1] R¹-COOM¹

In the Chemical Formula 1, R is a C2-5 alkyl group comprising unsaturated bond, and M' is a hydrogen atom, monovalent or divalent metal, an ammonium group or an organic amine salt.

Preferably, the monomer may be one or more selected from the group consisting of acrylic acid, methacrylic acid, and monovalent (alkali) metal salt, divalent metal salt, ammonium salt and organic amine salt of these acids. As such, in case acrylic acid and/or a salt thereof is used as water soluble ethylenically unsaturated monomers, super absorbent polymer with improved absorption property may be obtained. Besides, as the monomers, anionic monomers and salts thereof such as maleic anhydride, fumaric acid, crotonic acid, itaconic acid, 2-acryloylethane sulfonic acid 2-methacryloylethane sulfonic acid, 2-methacryloylpropane sulfonic acid, or 2-methacrylamide-2-methylpropane sulfonic acid; non-ionic hydrophilic containing monomers such as methacrylamide, N-substituted(meth)acrylate, 2-hydroxyethyl methacrylate, 2-hydroxypropyl methacrylate, methoxy polyethylene glycol methacrylate, polyethylene glycol methacrylate; and amino group containing unsaturated monomers and quarternarized products thereof, such as (N,N)-dimethylaminoethyl(meth)acrylate or (N,N)-dimethylaminopropyl(meth)acrylate.

Wherein, the water soluble ethylenically unsaturated monomers have acid groups. In the preparation of super absorbent polymer according to one example, monomers in which at least a part of the acid groups had been neutralized by a neutralization agent were subjected to crosslinking polymerization to form hydrogel polymer. Specifically, in the step of mixing the water soluble ethylenically unsaturated monomers having acid groups, internal crosslinking agent, polymerization initiator and neutralization agent, at least a part of the acid groups of the water soluble ethylenically unsaturated monomers were neutralized.

In the preparation of super absorbent polymer according to another example, while the acid groups of the water soluble ethylenically unsaturated monomers are not neutralized, polymerization is first conducted to form polymer.

The water soluble ethylenically unsaturated monomers (for example, acrylic acid), of which acid groups are not neutralized, are liquid at room temperature and have high miscibility with a solvent (water), and thus, exist in the state of a mixed solution in the monomer composition. However, water soluble ethylenically unsaturated monomers, of which acid groups are neutralized, are solid at room temperature, and have different solubilities according to the temperature of a solvent (water), and the solubility is lower as the temperature is lower.

As such, the water soluble ethylenically unsaturated monomers (for example, acrylic acid), of which acid groups are not neutralized, have higher solubility to or miscibility with a solvent (water) than the monomers of which acid groups are neutralized, and are not extracted even at low temperature, and thus, are favorable for polymerization for a long time at low temperature. Thus, by conducting polymerization for a long time using the water soluble ethylenically unsaturated monomers (for example, acrylic acid), of which acid groups are not neutralized, polymer having higher molecular weight and uniform molecular weight distribution may be stably formed.

Further, polymer of longer chain can be formed, thus achieving the effect for reducing extractable contents that exist in non-crosslinked state due to incomplete polymerization or crosslinking.

Further, as such, if polymerization is first conducted while the acid groups of the monomers are not neutralized, to form polymer, and the polymer is micronized in the presence of a surfactant after neutralization, or the acid groups existing in the polymer are neutralized simultaneously with micronization, the surfactant may exist on the surface of the polymer in large quantities, and sufficiently perform a function for lowering adhesion of polymer.

In the monomer composition, the concentration of the water soluble ethylenically unsaturated monomers may be appropriately controlled considering polymerization time and reaction conditions, and the like, and it may be controlled to about 20 to about 60 wt%, or about 30 to about 40 wt%.

As used herein the term 'internal crosslinking agent' is used to distinguish from a surface crosslinking agent for crosslinking the surface of super absorbent polymer particles described later, and it functions for introducing crosslinks between unsaturated bonds of the above explained water soluble ethylenically unsaturated monomers, to form polymer comprising a crosslink structure. In this step, crosslinking is progressed without distinction of a surface and inside, but in case a surface crosslinking process of super absorbent polymer is progressed as described later, the surface of the finally prepared super absorbent polymer particles may consist of a structure crosslinked by the surface crosslinking agent, and the inside of the super absorbent polymer particles may consist of a structure crosslinked by the internal crosslinking agent.

As the internal crosslinking agent, any compounds can be used as long as they enable the introduction of crosslink during polymerization of the water soluble ethylenically unsaturated monomers. As non-limiting examples, as the internal crosslinking agent, multifunctional crosslinking agents such as N,N'-methylenebisacrylamide, trimethylolpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, or ethylene carbonate may be used alone or in combination, but the internal crosslinking agent is not limited thereto. Preferably, among them, polyethylene glycol di(meth)acrylate may be used.

The crosslinking polymerization of water soluble ethylenically unsaturated monomers in the presence of such an internal crosslinking agent may be conducted in the presence of a polymerization initiator, a thickener, a plasticizer, a preservative, an antioxidant, and the like, as necessary.

In the monomer composition, the internal crosslinking agent may be used in an amount of 0.01 to 5 parts by weight, based on 100 parts by weight of the water soluble ethylenically unsaturated monomers. For example, the internal crosslinking agent may be used in an amount of 0.01 parts by weight or more, or 0.05 parts by weight or more, or 0.1 parts by weight or more, and 5 parts by weight or less, or 3 parts by weight or less, or 2 parts by weight or less, or 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, the internal crosslinking density may increase, and thus, it may be difficult to realize desired water retention capacity.

The polymer formed using such an internal crosslinking agent has a three-dimensional network structure in which main chains formed by polymerization of the water soluble ethylenically unsaturated monomers are crosslinked by the internal crosslinking agent. As such, in case polymer has a three-dimensional network structure, compared to a two-dimensional linear structure that is not additionally crosslinked by an internal crosslinking agent, the properties of super absorbent polymer such as water retention capacity and absorbency under pressure may be remarkably improved.

The step of conducting polymerization of the monomer composition to form polymer (step 1) may be conducted in a batch type reactor.

In the common preparation method of super absorbent polymer, the polymerization method is largely divided into thermal polymerization and photopolymerization according to polymerization energy source, and commonly, thermal polymerization may be progressed in a reactor equipped with a stirring axis such as a kneader, and photopolymerization may be progressed in a reactor equipped with a movable conveyor belt or in a flat-bottom container.

Meanwhile, by such a polymerization method, generally, polymer having modest molecular weight and wide molecular weight distribution is formed according to short polymerization reaction time (for example, 1 hour or less).

Meanwhile, in case photopolymerization is progressed in a reactor equipped with a movable conveyor belt or in a flat bottom container, hydrogel polymer sheet having a width of the belt is commonly obtained, and the thickness of the polymer sheet may vary according to the concentration of introduced monomer composition and introduction speed or introduction amount, but commonly, it may be about 0.5 to about 5cm.

However, in case the monomer composition is supplied such that the thickness of the polymer sheet becomes too thin, production efficiency may be low, and in case the thickness of polymer sheet is increased for productivity, a polymerization reaction may not uniformly occur over the whole thickness, and thus, it may be difficult to form high quality polymer.

Further, since polymerization in the reactor equipped with a stirring axis and conveyor belt is continuously progressed while polymerization product moves and new monomer composition is fed to the reactor, polymers having different polymerization rates may be mixed, and thus, polymerization may not uniformly occur over the whole monomer composition, thus causing property deterioration.

However, by progressing fixed-bed type polymerization in a batch type reactor, there is little concern about mixing of polymers having different polymerization rates, and thus, polymer having uniform quality may be obtained.

Further, the polymerization step is conducted in a batch type reactor having a predetermined volume, and a polymerization reaction is conducted for a longer time than the case of conducting continuous polymerization in a reactor equipped with a conveyor belt, for example, for 6 hours or more. Despite the long polymerization reaction time, since polymerization is conducted for non-neutralized water soluble ethylenically unsaturated monomers, even if polymerization is conducted for a long time, monomers may not be easily precipitated, thus favorable for polymerization for a long time.

Meanwhile, the polymerization in a batch type reactor of the invention uses thermal polymerization, and thus, uses a thermal polymerization initiator as the polymerization initiator.

As the thermal polymerization initiator, one or more selected from the group consisting of persulfate-based initiators, azo-based initiators, hydrogen peroxide and ascorbic acid may be used. Specifically, as the examples of the persulfate-based initiators, sodium persulfate (Na₂S₂O₈), potassium persulfate (K₂S₂O₈), ammonium persulfate ((NH₄)₂S₂O₈), and the like, may be mentioned, and as the examples of the azo-based initiators, 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like may be mentioned. More various thermal polymerization initiators are stated in Odian, 'Principle of polymerization (Wiley, 1981)', p203, but the invention is not limited thereto.

Such a polymerization initiator may be used in an amount of 2 parts by weight or less, based on 100 parts by weight of the water soluble ethylenically unsaturated monomers. Namely, if the concentration of the polymerization initiator is too low, polymerization speed may become slow, and remaining monomers may be extracted in large quantities in the final product. To the contrary, if the concentration of the polymerization initiator is too high, polymer chains making up a network may become short, and thus, extractable contents may increase, and absorbency under pressure may decrease, thus deteriorating properties of polymer.

Meanwhile, in one example, polymerization may be initiated by introducing the initiator together with a reducing agent forming a redox couple with the initiator.

Specifically, the initiator and reducing agent, when introduced in a polymerization solution, react with each other to form radicals.

The radicals formed react with monomers, and since the oxidation-reduction reaction between the initiator and reducing agent is highly reactive, even if small amounts of initiator and reducing agent are introduced, polymerization may be initiated, thus enabling low temperature polymerization without need to increase process temperature, and minimizing property change of the polymer solution.

The polymerization using oxidation-reduction reaction may smoothly occur at a temperature around a room temperature (25 ºC) or lower temperature. For example, the polymerization reaction may be conducted at a temperature of 5 ºC or more and 25 ºC or less, or 5 ºC or more and 20 ºC or less.

In case a persulfate-based initiator is used as the initiator, as the reducing agent, one or more selected from the group consisting of sodium metabisulfite (Na₂S₂O₅); tetramethyl ethylenediamine (TMEDA); a mixture of iron sulfate(II) and EDTA (FeSO₄/EDTA); sodium formaldehyde sulfoxylate; and disodium 2-hydroxy-2-sulfinoacteate may be used.

For example, potassium persulfate may be used as the initiator, and disodium 2-hydroxy-2-sulfinoacetate may be used as the reducing agent; ammonium persulfate may be used as the initiator, and tetramethyl ethylenediamine may be used as the reducing agent; or sodium persulfate may be used as the initiator, and sodium formaldehyde sulfoxylate may be used as the reducing agent.

In case a hydrogen peroxide-based initiator is used as the initiator, the reducing agent may be one or more selected from the group consisting of ascorbic acid; sucrose; sodium sulfite (Na₂SO₃) sodium metabisulfite (Na₂S₂O₅); tetramethyl ethylenediamine (TMEDA); a mixture of iron sulfate(II) and EDTA (FeSO₄/EDTA); sodium formaldehyde sulfoxylate; disodium 2-hydroxy-2-sulfinoacteate; and disodium 2-hydroxy-2-sulfoacteate.

The monomer composition may further comprise additives such as a thickener, a plasticizer, a preservative, an antioxidant, and the like, as necessary.

Further, the monomer composition may be prepared in the form of a solution dissolved in a solvent such as water, and the solid content in the monomer composition solution, i.e., the concentration of monomers, internal crosslinking agent and polymerization initiator may be appropriately controlled considering polymerization and reaction conditions, and the like. For example, solid content in the monomer composition may be 10 to 80 wt%, or 15 to 60 wt%, or 30 to 50 wt%.

Wherein, a solvent that can be used is not limited as long as it can dissolve the above explained components, and for example, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methyl celosolve acetate and N,N-dimethylacetamide or mixtures thereof may be used.

Polymer obtained by such a method may have high molecular weight and uniform molecular weight distribution, and reduced extractable contents, because polymerization is conducted using non-neutralized ethylenically unsaturated monomers,

Polymer obtained by such a method is in the state of hydrogel polymer and may have a moisture content of 30 to 80 wt%. For example, the moisture content of the polymer may be 30 wt% or more, or 45 wt% or more, or 50 wt% or more, and 80 wt% or less, or 70 wt% or less, or 60 wt% or less.

If the moisture content of polymer is too low, it may be difficult to secure appropriate surface area in the subsequent grinding step, and thus, the polymer may not be effectively ground, and if the moisture content of polymer is too high, pressure applied in the subsequent grinding step may increase, and thus, it may be difficult to grind to a desired particle size.

Meanwhile, throughout the specification, a "moisture content" is the content of moisture occupied, based on the total polymer weight, and it means a value obtained by subtracting the weight of dried polymer from the weight of polymer. Specifically, it is calculated by measuring weight decrease according to evaporation of moisture in the polymer while increasing the temperature of polymer in the state of crumb to dry through infrared heating. Wherein, a temperature is increased from a room temperature to about 180ºC, and then, maintained at 180ºC, and the total drying time is set to 40 minutes including 5 minutes of the temperature rise step.

Next, a step of neutralizing at least a part of the acid groups of the polymer (step 2) is conducted.

Wherein, as the neutralization agent, basic material such as sodium hydroxide, potassium hydroxide, ammonium hydroxide, and the like, capable of neutralizing acid groups may be used.

Further, a neutralization degree, which refers to a degree to which the acid groups included in the polymer are neutralized by the neutralization agent, may be 50 to 90 mol%, or, 60 to 85 mol%, or 65 to 85 mol%, or 65 to 75 mol%. The range of the neutralization degree may vary according to the final properties, but if the neutralization degree is too high, absorption capability of super absorbent polymer may decrease, and due to excessively low concentration of carboxylic groups on the surface of particles, it may be difficult to sufficiently conduct surface crosslinking in the subsequent process, and thus, absorbency under pressure or permeability may decrease. To the contrary, if the neutralization degree is too low, absorption force of polymer may significantly decrease, and the polymer may exhibit rubber-like property which is difficult to handle.

Simultaneously with the step 2, or before or after conducting the step 2, a step of micronizing the polymer in the presence of a surfactant to prepare hydrated super absorbent polymer (step 3) is conducted.

This step is a step of micronizing the polymer in the presence of a surfactant, wherein the polymer is not chopped to millimeter size, but finely cut to tens to hundreds of micrometers and simultaneously aggregated. Namely, by giving appropriate adhesion to polymer, secondary aggregated particles in which primary particles finely cut to tens to hundreds of micrometer size are aggregated, are prepared. The secondary aggregated particles prepared by such a step, i.e., hydrated super absorbent polymer particles, have normal particle size distribution, but have significantly increased surface area, and thus, have remarkably improved absorption speed.

As such, after mixing the polymer with a surfactant, by micronizing the polymer in the presence of the surfactant, hydrated super absorbent polymer particles in the form of secondary aggregated particles formed by fine cutting and aggregation while super absorbent polymer particles and surfactant are mixed, may be prepared.

Wherein, "hydrated super absorbent polymer particles" refer to particles having moisture content of about 30 wt% or more, and since it is formed by fine cutting and aggregation of polymer to particles without a drying process, it may have a moisture content of 30 to 80 wt% like the polymer.

The surfactant may be one or more selected from the group consisting of compounds represented by the Chemical Formula 2 and salts thereof, but not limited thereto.

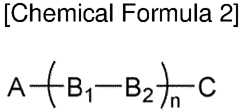

In the Chemical Formula 2,
A is C5-21 alkyl,
B₁ is -OCO-, -COO-, or -COOCH(R₁)COO-,
B₂ is -CH₂-, -CH₂CH₂-, -CH(R₂)-, -CH=CH-, or -C=C-,
wherein, R₁ and R₂ are each independently, C1-4 alkyl,
n is an integer of 1 to 3, and
C is a carboxyl group.

Wherein, the surfactant is one or more selected from the group consisting of carboxylic acid represented by the Chemical Formula 2 and metal salts thereof. Specifically, the surfactant is one or more selected from the group consisting of carboxylic acid represented by the Chemical Formula 2, alkali metal salts of carboxylic acid represented by the Chemical Formula 2, and alkali earth metal salts of carboxylic acid represented by the Chemical Formula 2. More specifically, the surfactant is one of carboxylic acid represented by the Chemical Formula 2, alkali metal salts of carboxylic acid represented by the Chemical Formula 2, and alkali earth metal salts of carboxylic acid represented by the Chemical Formula 2.

In the Chemical Formula 2, A is a moiety representing hydrophobicity and may be a linear or branched alkyl group having carbon number of 5 to 21, but in case A is a linear alkyl group, aggregation of ground particles may be inhibited and dispersibility may be improved, and thus, such a case is more favorable. In case A is an alkyl group having a carbon number less than 5, due to short chain length, aggregation of ground particles may not be effectively controlled, and in case A is an alkyl group having a carbon number greater than 21, mobility of the surfactant may decrease, and thus, it may not be effectively mixed with polymer, or due to cost increase of the surfactant, unit price of the composition may increase.

Specifically, in the Chemical Formula 2, A is a linear alkyl having a carbon number of 5 to 21, namely, n-pentyl, n-hexyl, n-heptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, n-octadecanyl, n-nonadecanyl, n-icosanyl, or n-heticosany.

More specifically, A may be a linear alkyl having a carbon number of 6 to 18. For example, A may be -C₆H₁₃, -C₁₁H₂₃, -C₁₂H₂₅, -C₁₇H₃₅, or -C₁₈H₃₇.

Further, in the Chemical Formula 2, the (B₁-B₂) moiety functions for improving adsorption performance to the polymer surface, which may be insufficient only with the C moiety, and in case the carbon number of B₂ is 3 or more, a distance between B₁ and C may increase, and thus, adsorption performance to polymer may be deteriorated.

Wherein, R₁ and R₂ may be each independently, linear or branched alkyl having a carbon number of 1 to 4, and more specifically, R₁ and R₂ may be each independently, methyl, ethyl, propyl, isopropyl, butyl, isobutyl, sec-butyl or tert-butyl, but since the surfactant is adsorbed to super absorbent polymer particles, it is favorable that the molecular structure of the surfactant is not bulky, and thus, both R₁ and R₂ may be methyl.

Further, in the Chemical Formula 2, n may be 1, 2 or 3. More specifically, it is preferable that n, denoting the number of (B₁-B₂), is 1, considering the function of the (B₁-B₂) for reinforcing adsorption performance for the C moiety, and the molecular length of the surfactant for effective adsorption to polymer.

Specifically, in the Chemical Formula 2, B₁ may be 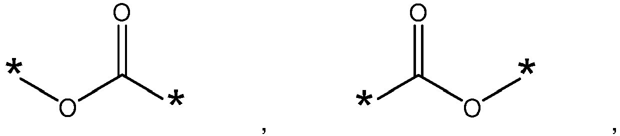 or 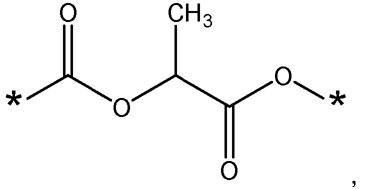 wherein * is a bonding site with neighboring atom.

For example, B₁ may be 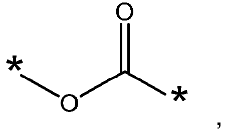 or

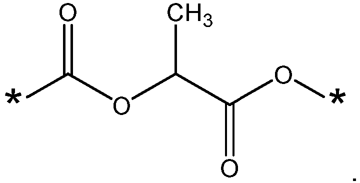

Further, in the Chemical Formula 2, B₂ may be 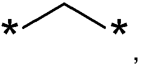 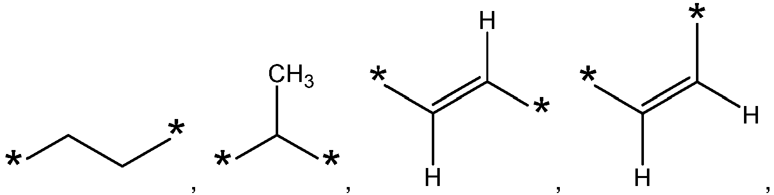 or 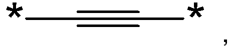 wherein * is a bonding site with neighboring atom. Wherein, it is preferable that B₂ is 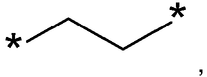 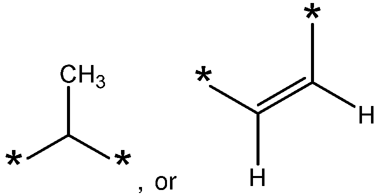 because it improves adsorption performance of the surfactant to crosslinked polymer together with the C moiety.

Further, in the Chemical Formula 2, C is a moiety representing hydrophilicity, and is a carboxylic group (COOH), but in case the surfactant is a salt, it is a carboxylate group (COO-).

Namely, the surfactant may be a compound represented by the following Chemical Formula 2a:

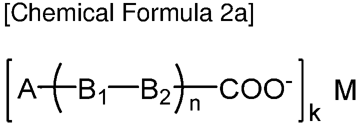

In the Chemical Formula 2a,
M is H⁺, monovalent cation of alkali metal, or divalent cation of alkali earth metal,
k is 1 if M is H⁺ or monovalent cation of alkali metal, and k is 2 if M is divalent cation of alkali earth metal, and
A, B₁, B₂ and n are as defined in the Chemical Formula 2.

More specifically, in case the surfactant is an alkali metal salt of carboxylic acid represented by the Chemical Formula 2, the surfactant may be represented by the following Chemical Formula 2':

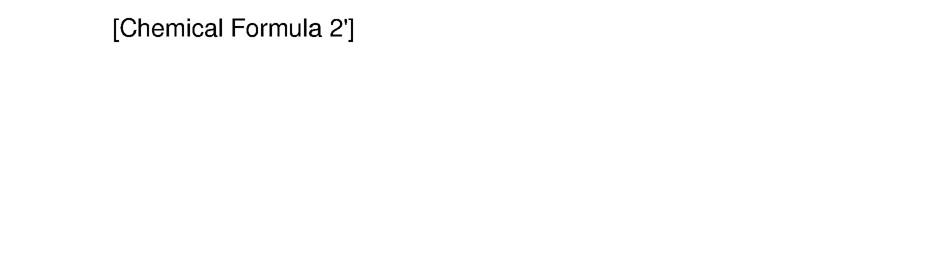

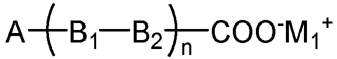

In the Chemical Formula 2',
M₁ is alkali metal, for example, sodium or potassium, and
A, B₁, B₂ and n are as defined in the Chemical Formula 2.

Further, in case the surfactant is an alkali earth metal salt of carboxylic acid represented by the Chemical Formula 2, the surfactant may be represented by the following Chemical Formula 2":

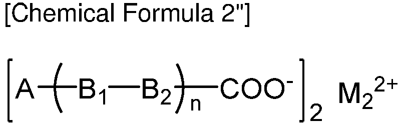

In the Chemical Formula 2", M₂ is alkali earth metal, for example, calcium, and
A, B₁, B₂ and n are as defined in the Chemical Formula 2.

Meanwhile, the surfactant may be used in an amount of 0.01 to 10 parts by weight, based on 100 parts by weight of the polymer. If the amount of the surfactant used is too small, it may not be uniformly adsorbed on polymer surface, and thus, reaggregation of particles may be generated after grinding, and if the amount of the surfactant used is too large, the properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less, based on 100 parts by weight of the polymer.

A method for mixing such a surfactant with polymer is not specifically limited as long as it can uniformly mix them. Specifically, the surfactant may be dry mixed, or it may be dissolved in a solvent and then mixed in a solution state, or it may be molten and then mixed.

For example, the surfactant may be mixed in the state of a solution dissolved in a solvent. Wherein, as the solvent, inorganic solvents or organic solvents may be used without limitations, but considering easiness of a drying process and cost of solvent recovery system, water is most appropriate. Further, the surfactant and polymer may be put in a reactor and mixed, or polymer may be put in a mixer and the solution may be sprayed, or polymer and the solution may be continuously supplied to a continuously operated mixer and mixed, and the like.

Meanwhile, in one example, the step of neutralizing at least a part of the acid groups of the polymer (step 2), and the step of micronizing the polymer in the presence of a surfactant, to prepare hydrated super absorbent polymer particles (step 3) may be sequentially or simultaneously conducted.

Namely, a neutralization agent may be introduced in polymer to neutralize the acid groups first, and then, a surfactant may be introduced in the neutralized polymer to micronize polymer mixed with surfactant, or a neutralization agent and a surfactant may be simultaneously introduced in polymer to conduct neutralization and micronization of polymer. Alternatively, a surfactant may be introduced first and a neutralization agent may be introduced later. Alternatively, a neutralization agent and a surfactant may be alternately introduced.

Meanwhile, for uniform neutralization over the whole polymer, it may be preferable to set a regular time difference between the introduction of the neutralization agent and the micronizing process.

At least a part or significant amount of the surfactant may exist on the surfaces of the hydrated super absorbent polymer particles.

Wherein, the description "the surfactant exists on the surfaces of hydrated super absorbent polymer particles" means that at least a part or significant amount of the surfactant is adsorbed or bonded to the surfaces of the hydrated super absorbent polymer particles. Specifically, the surfactant may be physically or chemically adsorbed to the surface of the super absorbent polymer. More specifically, the hydrophilic functional groups of the surfactant may be physically adsorbed to the hydrophilic parts of the super absorbent polymer surface by intermolecular force such as dipole-dipole interaction. As such, the hydrophilic parts of the surfactant are physically adsorbed to the surface of the super absorbent polymer particles to cover the surface, and the hydrophobic parts of the surfactant are not adsorbed to the surface of polymer particles, and thus, polymer particles may be coated with the surfactant in the form of a micelle structure. This is because the surfactant is not introduced during the polymerization process of the water soluble ethylenically unsaturated monomers, but introduced in the micronizing step after formation of polymer, and compared to the case wherein the surfactant is introduced during the polymerization process and exists inside the polymer, a function as a surfactant may be fully performed, and since grinding and aggregation simultaneously occur, particles having large surface area may be obtained in the form of aggregated fine particles.

In one example, the step of micronizing the polymer to prepare hydrated super absorbent polymer may be conducted two or more times.

For example, when the micronizing step is conducted twice, it may comprise a step of primarily micronizing polymer, and a step of secondarily micronizing so as to have a smaller average particle diameter than the primarily micronized polymer. As such, in case the micronizing step is conducted twice or more, it may be conducted in such a way that polymer may have a smaller average particle diameter than in the previous micronizing step in a series of micronizing steps.

In one example, the first and second micronizing steps are conducted by a micronizing apparatus explained below.

In case polymer mixed with the surfactant is micronized using a micronizing apparatus, smaller particle size distribution may be realized, and the subsequent drying and grinding processes may be conducted under milder conditions, and thus, generation of fine particles may be prevented, and the properties of super absorbent polymer may be improved.

And then, a step of drying the micronized hydrogel to prepare dried super absorbent polymer particles (step 4) is conducted.

The step 4 is a step of drying the moisture of hydrated super absorbent polymer particles obtained by micronizing the polymer in the presence of a surfactant.

In the preparation method of super absorbent polymer according to one example, it is in general that the drying step is conducted until the moisture content of super absorbent polymer particles become less than 10 wt%, but according to another example, drying is conducted such that the moisture content of super absorbent polymer becomes 10 wt% or more, for example, about 10 to about 20 wt%, or about 10 to about 15 wt%.

For this purpose, a temperature in a dryer used in the drying step may be about 150°C or less, for example, about 80°C to about 150°C, and the drying may be conducted at relatively low temperature. If the temperature in a dryer is too low, drying time may be too lengthened, and if the drying temperature is too high, super absorbent polymer having lower moisture content than the above desired moisture content may be obtained.

Wherein, drying may be conducted by moving type drying. Such moving type drying is distinguished from fixed-bed type drying according to whether material moves or not during drying.

The moving type drying refers to a method of drying while mechanically stirring a dried body. Wherein, a direction where hot air passes through material may be identical to or different from the circulation direction of the material. Alternatively, material may be circulated inside a dryer, and heat transfer fluid may be passed through a separate pipe outside the dryer to dry the material.

On the other hand, fixed-bed type drying refers to a method of drying wherein hot air passes through material from the top to the bottom, while material to be dried is stopped on a bottom such as a perforated steel plate through which air can pass.

Thus, it is preferable that hydrated super absorbent polymer is dried by moving type drying because uniform drying can be completed in a short time.

As an apparatus capable of moving type drying, a horizontal-type mixer, a rotary kiln, a paddle dryer, a steam tube dryer, or commonly used moving type dryers, and the like, may be used.

Next, a step of grinding the dried super absorbent polymer particles to prepare super absorbent polymer particles (step 5) is conducted.

Specifically, the grinding step may be conducted by grinding dried super absorbent polymer particles to a particle size of normal particle level, namely, particle diameter of 150 µm to 850 µm.

A grinder used for this purpose may be specifically, a vertical pulverizer, a turbo cutter, a turbo grinder, a rotary cutter mill, a cutter mill, a disc mill, a shred crusher, a crusher, a chopper or a disc cutter, and the like, but is not limited thereto.

Further, as a grinder, a pin mill, a hammer mill, a screw mill, a roll mill, a disc mill or a jog mill, and the like may be also used, but is not limited thereto.

Meanwhile, according to the preparation method of the invention, in the micronizing step, super absorbent polymer particles of smaller particle size distribution may be realized than in the conventional chopping step, and thus, even if grinding is conducted with smaller grinding force under mild conditions, super absorbent polymer having very high content of normal particles may be prepared, and the generation rate of fine particles may be significantly reduced. Furthermore, a grinding process may be omitted.

The super absorbent polymer particles thus prepared may comprise super absorbent polymer particles having particle diameter of 150 µm to 850 µm, namely normal particles, in the content of 80 wt% or more, 85 wt% or more, 89 wt% or more, 90 wt% or more, 92 wt% or more, 93 wt% or more, 94 wt% or more, or 95 wt% or more, based on the total weight. The particle diameter of polymer particles may be measured according to European Disposables and Nonwovens Association (EDANA) standard EDANA WSP 220.3 method.

Further, the super absorbent polymer particles may comprise fine particles having particle diameter less than 150 µm, in the content of about 10 wt% or less, specifically about 5 wt% or less, more specifically about 3 wt% or less, based on the total weight. It is contrasting to super absorbent polymer prepared according to the conventional preparation method, having fine particle content of about 10 wt% to about 20 wt%.

After the step of grinding the super absorbent polymer particles, a step of classifying the ground super absorbent polymer particles according to particle diameter may be further included.

Further, after grinding and/or classifying the super absorbent polymer particles, a step of forming a surface crosslink layer on at least a part of the surfaces of the super absorbent polymer particles in the presence of a crosslinking agent may be further included. By the step, crosslinked polymer included in the super absorbent polymer particles is additionally crosslinked by a surface crosslinking agent, thus forming a surface crosslink layer on at least a part of the surfaces of the super absorbent polymer particles.

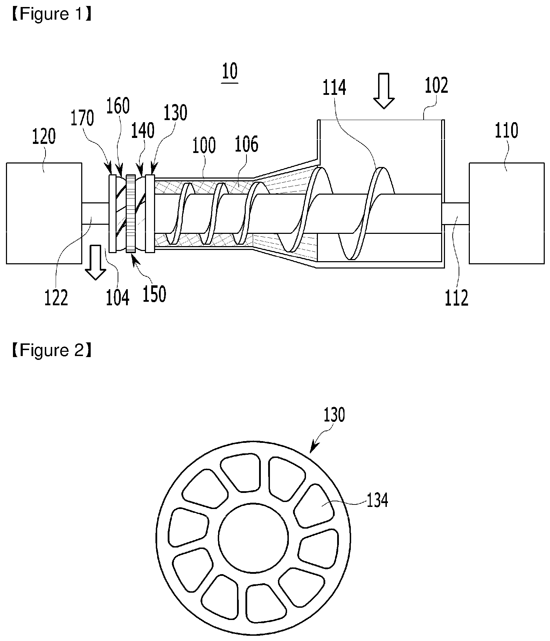

Hereinafter, referring to Fig. 1 to Fig. 6, a micronizing apparatus for hydrogel of super absorbent polymer (10) according to the embodiment of the invention, used in the primary and secondary micronizing steps, will be explained in more detail.

Fig. 1 is a cross-sectional view of the micronizing apparatus for hydrogel of super absorbent polymer (10) according to the embodiment of the invention. As shown in Fig. 1, the micronizing apparatus for hydrogel of super absorbent polymer (10) according to the embodiment of the invention comprises a body (100), first and second driving motors (110, 120), and a cutting part.

In the body (100), a transfer space (106) in which hydrogel is transferred, and a cutting space in which polymerized hydrogel or reassembled hydrogel is ground and pressed to be micronized, are formed. Further, a discharge space (104) that is positioned adjacent to the cutting space and discharges micronized hydrogel, is also formed. The transfer space (106) is formed from one side part to the other side part along the longitudinal direction of the body (100), and the cutting space is formed at the other side part in the longitudinal direction of the body (100), and the discharge space (104) is formed at the other side of the cutting part in the longitudinal direction of the body (100), and thus, the transfer space (106), cutting space and discharge space (104) are sequentially formed along the movement of hydrogel. Thus, hydrogel is transferred along the longitudinal direction of the body (100) in the transfer space (106), micronized in the cutting space, and discharged in the discharge space (104). Inside of the body (100) between the transfer space (106) and discharge space (104), a cutting space is positioned, and in the cutting space, cutting part is disposed.

At the upper part of one side of the body (100), a hopper (102) connected to the transfer space (106) is formed, and hydrogel discharged from a polymerization reactor or reassembled hydrogel is introduced into the body (100), namely, into the transfer space (106), through the hopper (102). At the other side of the body (100), a discharge space (104) is formed, and hydrogel micronized by the cutting part is discharged through the discharge space (104).

In the transfer space (106) of the body (100), a first rotation shaft (112) is rotatably disposed, and in the discharge space (104), a second rotation shaft (122) is rotatably disposed. The first rotation shaft (112) and the second rotation shaft (122) may be co-axially disposed, and extended to the cutting space. The first rotation shaft (112) is connected to one rotation member of the cutting part, and the second rotation shaft (122) is connected to another rotation member of the cutting part. The end of the first rotation shaft (112) and the end of the second rotation shaft (122) are spaced apart from each other, and thus, rotation of one of the first and second rotation shafts (112, 122) does not affect rotation of the other of the first and second rotation shafts (112, 122). Namely, the first and second rotation shafts (112, 122) may be controlled independently from each other.

At one side of the body (100), a first driving motor (110) is disposed, and the first driving motor (110) is connected to the first rotation shaft (112). Namely, one end of the first rotation shaft (112) disposed in the transfer space (106) penetrates through the surface of one side of the body (100) and is connected to the first driving motor (110), and the other end of the first rotation shaft (112) extends to the cutting space. At the outer circumferential surface of the first rotation shaft (112), at least one screw (114) is formed. Alternatively, the first rotation shaft (112) may be connected to an axis having a screw (114) formed at the outer circumferential surface, and transfer a driving force to the axis. If the first driving motor (110) provides a driving force to the first rotation shaft (112) and the first rotation shaft (112) rotates, the screw (114) rotates together with the first rotation shaft (112) and transfers hydrogel inside the transfer space (106) to the other side in the longitudinal direction, towards the cutting part.

At the other side of the body (100), a second driving motor (120) is disposed, and the second driving motor (120) is connected to the second rotation shaft (122). Namely, one end of the second rotation shaft (122) disposed in the discharge space (104) penetrates through the surface of the other side of the body (100) and extends to the cutting space, and the other end of the second rotation shaft (122) is connected to the second driving motor (120).

As explained above, one end of the second rotation shaft (122) is spaced apart from the other end of the first rotation shaft (112) in the longitudinal direction, and thus, rotation of the first rotation shaft (112) and rotation of the second rotation shaft (122) are independent from each other. Namely, the rotation speed of the first rotation shaft (112) by the first driving motor (110) may be controlled independently, particularly differently from the rotation speed of the second rotation shaft (122) by the second driving motor (120).

The cutting part is disposed in the cutting space, and finely cuts and presses hydrogel transferred by the screw (114) and discharges it to the discharge space (104). The cutting part comprises a pre-cutter (130), first and second cutters (140, 160), and first and second hole plates (150, 170). The pre-cutter (130), first cutter (140), first hole plate (150), second cutter (160), and second hole plate (170) are sequentially disposed from one side to the other side along the longitudinal direction. Thus, hydrogel transferred to the cutting space along the longitudinal direction in the transfer space (106) sequentially passes through the pre-cutter (130), first cutter (140), first hole plate (150), second cutter (160), and second hole plate (170) and is micronized, and the micronized hydrogel is discharged to the discharge space (104).

Fig. 2 is a front view of the pre-cutter (130) used in the micronizing apparatus for hydrogel of super absorbent polymer according to the embodiment of the invention. As shown in Fig. 2, the pre-cutter (130) generally has a disc shape, and is fixed to the body (100) at the other side of the at least one screw (114). At the central part of the pre-cutter (130), a central hole through which the first rotation shaft (112) rotatably penetrates is formed, and radially outside the central hole, a plurality of pre-cutter holes (134) are formed along the circumferential direction. Although Fig. 2 exemplifies that the plurality of pre-cutter holes (134) have identical shapes and are disposed at equal intervals, the shape and arrangement of the pre-cutter holes (134) are not limited to the example illustrated in Fig. 2.

The pre-cutter (130) reduces rotating components from the movement of hydrogel transferred in the longitudinal direction while rotating by the rotating screw (114), and supplies the hydrogel to the first cutter (140) in the longitudinal direction. More specifically, by the screw (114), hydrogel rotates and is supplied to the pre-cutter (130) in the longitudinal direction. Since the pre-cutter (130) does not rotate but is fixed to the body (100), when hydrogel passes through the pre-cutter holes (134), by the partitions between the pre-cutter holes (134), among the movement of hydrogel, straight components are not affected but rotating components decrease. If, among the movement of hydrogel, rotating components decrease, the number of collision of hydrogel with the first cutter (140) may be controlled according to the rotation speed of the first cutter (140), and a pressure applied to hydrogel when the hydrogel passes through the first and second hole plates (150, 170) are reduced. Thus, the pre-cutter (130) allows progression of fine cutting and pressing of hydrogel in a controlled way, and reduces damage of hydrogel particles, thus improving the properties. Wherein, the main function of the pre-cutter (130) is not fine cutting and pressing of hydrogel, but is to decrease rotating components from the movement of hydrogel, and thus, the size of the pre-cutter holes (134) may be relatively larger than the first and second through-holes (152, 172) formed in the first and second hole plates (150, 170).

Referring to Fig. 1 again, the first cutter (140) is disposed at the other side of the pre-cutter (130) while being spaced apart therefrom. The first cutter (140) is equipped with plural first cutter blades, and is connected to the other end of the first rotation shaft (112). Thus, the first cutter (140) rotates by the first driving motor (110) and finely crushes hydrogel having passed through the pre-cutter (130). For this purpose, the other end of the first rotation shaft (112) penetrates through the pre-cutter (130) and is connected to the first cutter (140). The first cutter (140) rotates at a relatively slow rotation speed and primarily grinds hydrogel. In one example, the rotation speed of the first cutter (140) (i.e., the first rotation shaft (112)) may be about 100rpm ~ 300rpm, but is not limited thereto. Further, the first cutter (140) is equipped with 6 first cutter blades, and the first cutter blades are inclined at about 45° ~ 60° to the longitudinal direction, but the number of the first cutter blades and the inclination angle of the first cutter blades are not limited thereto.

Hydrogel primarily ground by the first cutter (140) is transferred to the first hole plate (150).

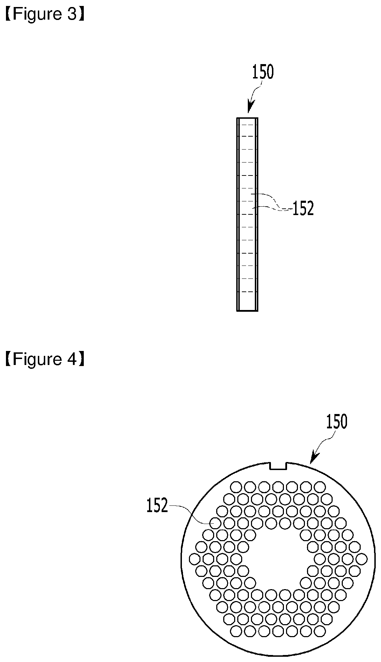

Fig. 3 is a side view of the first hole plate (150) used in the micronizing apparatus for hydrogel of super absorbent polymer according to the embodiment of the invention. Fig. 4 is a front view of the first hole plate (150) shown in Fig. 3. As shown in Fig. 3 and Fig. 4, the first hole plate (150) is disposed at the other side of the first cutter (140) while being spaced a first predetermined gap apart. The first hole plate (150) is fixed to the body (100), and has a plurality of first through-holes (152) formed in the longitudinal direction. Hydrogel primarily crushed by the first cutter (140) passes through the first through-holes (152) and is discharged to the second cutter (160). The size of hydrogel having passed through the first through-holes (152) corresponds to the size of the first through-hole (152), and the transfer speed of hydrogel corresponds (is proportional) to the rotation speed of the first cutter (140) (i.e., the first rotation shaft (112)). In one example, the thickness of the first hole plate (150) may be about 7mm ~ 35mm, the diameter of each first through-hole (152) may be about 3mm ~ 20mm, and opening ratio of the first through holes (152) (rate of the total area of through-holes to the area of hole plate) may be about 30% ~ 55%, but are not limited thereto.

Referring to Fig. 1 again, the second cutter (160) is disposed at the other side of the first hole plate (150) while being spaced apart. The second cutter (160) is equipped with plural second cutter blades, and is connected to one end of the second rotation shaft (122). Thus, the second cutter (160) rotates by the second driving motor (120) and more finely crushes hydrogel having passed through the first hole plate (150). For this purpose, one end of the second rotation shaft (122) penetrates through the second hole plate (170) and is connected to the second cutter (160). The second cutter (160) rotates at a relatively rapid rotation speed and secondarily grinds hydrogel. In one example, the rotation speed of the second cutter (160) (i.e., the rotation speed of the second rotation shaft (122)) may be about 1000rpm ~ 1750rpm, but is not limited thereto. Wherein, the rotation speed of the second cutter (160) (i.e., the rotation speed of the second rotation shaft (122)) corresponds (is proportional) to the collision number of hydrogel with the second cutter (160) per unit time. While transfer speed of hydrogel is not increased by setting the rotation speed of the first cutter (140) or the first rotation shaft (112) relatively slow, collision number of hydrogel with the second cutter (160) per unit time may be increased by setting the rotation speed of the second cutter (160) or the second rotation shaft (122) relatively rapid,. Thereby, hydrogel is not accumulated in the cutting part, and thus, hydrogel particles may be miniaturized and generation of fine particles may be reduced. Meanwhile, the second cutter (160) is equipped with 6 second cutter blades, and the second cutter blades are inclined at about 45° ~ 60° to the longitudinal direction, but the number of the second cutter blades and the inclination angle of the second cutter blades are not limited thereto.

Hydrogel secondarily ground by the second cutter (140) is transferred to the second hole plate (170).

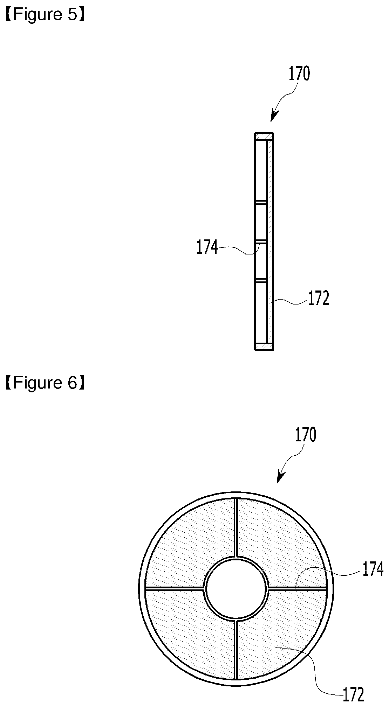

Fig. 5 is a side view of the second hole plate (170) used in the micronizing apparatus for hydrogel of super absorbent polymer of the embodiment of the invention, and Fig. 6 is a front view of the second hole plate (170) shown in Fig. 5. As shown in Fig. 5 and Fig. 6, the second hole plate (170) is disposed at the other side of the second cutter (160) while being spaced a second predetermined gap apart. The second hole plate (170) is fixed to the body (100), and has a plurality of second through-holes (172) formed in the longitudinal direction. Hydrogel secondarily crushed by the second cutter (160) passes through the plurality of second through-holes (172) and is discharged to the discharge space (104). The size of hydrogel having passed through the second through-holes (172) corresponds to the size of the second through-holes (172). In one example, the diameter of each second through hole (172) may be about 3mm ~ 16mm, and opening ratio of the second through-holes (172) (rate of the total area of through-holes to the area of hole plate) may be about 30% ~ 55%, but are not limited thereto. Further, by setting the diameter of the second through-holes (172) smaller than the diameter of the first through-holes (152), the size of hydrogel discharged to the discharge space (104) may be further reduced.

If the thickness of the second hole plate (170) is thick, a pressure applied to hydrogel when the hydrogel passes through the second hole plate may increase, thus deteriorating the properties of hydrogel. Thus, as the thickness of the second hole plate (170) is thinner, the properties of hydrogel is improved. In one example, the thickness of the second hole plate (170) may be about 3mm ~ 10 mm, but is not limited thereto.

Meanwhile, if the thickness of the second hole plate (170) is thin, the second hole plate (170) may be damaged by the pressure from hydrogel when the hydrogel passes through the second through-holes (172). Thus, the second hole plate (170) may be equipped with at least one rib (174) so as to reinforce rigidity of the second hole plate (170). Although Fig. 5 and Fig. 6 exemplify that 4 ribs are disposed at the other side of the second hole plate (170) in the form of a cross, the number and arrangement of ribs are not limited thereto. In one example, the sum of the thickness of the second through-hole (172) and the thickness of the rib (174) may be equal to the thickness of the second hole plate (170), but is not limited thereto.

At the central part of the second hole plate (170), a central hole is formed, and one end of the second rotation shaft (122) disposed in the discharge space (104) penetrates through the central hole and is connected to the second cutter (160).

Hereinafter, the operation of the micronizing apparatus (10) according to the embodiment of the invention will be explained.

If hydrogel discharged from a polymerization reactor or reassembled hydrogel is introduced in a transfer space (106) of a body (100) through the hopper (102), a first driving motor (110) operates. Thereby, a first rotation shaft (112) and a screw (114) rotate and transfer hydrogel towards a cutting part, and a first cutter (140) connected to the first rotation shaft (112) rotates. Wherein, the transfer speed of hydrogel corresponds to the rotation speed of the first rotation shaft (112) or first cutter (140).

Further, if a second driving motor (120) operates, a second rotation shaft (122) and a second cutter (160) also rotate. Wherein, the collision number of hydrogel with the second cutter (160) per unit time corresponds to the rotation speed of the second rotation shaft (122) or second cutter (160).

First, hydrogel transferred by the screw (114) passes through pre-cutter holes (134) of a pre-cutter (130) in the cutting part, and among the movement of hydrogel, rotating components are decreased. Hydrogel having passed through the pre-cutter holes (134) of the pre-cutter (130) collides with the first cutter blade of the first cutter (140) rotating by the first driving motor (110), and is primarily ground to particles of small size. If the size of hydrogel particles primarily ground by the first cutter (140) becomes smaller than the diameter of the first through-holes (152), the hydrogel particles pass through the first through-holes (152) and are transferred to the second cutter (160).

The hydrogel particles collide with the second cutter blade of the second cutter (160) rotating by the second driving motor (120), and are secondarily ground to particles of smaller size. As explained above, since the rotation speed of the second cutter (160) is more rapid than the rotation speed of the first cutter (140), collision number of hydrogel with the second cutter (160) is larger than the collision number of hydrogel with the first cutter (140). Thus, hydrogel particles are secondarily ground to smaller size by the second cutter (160). If the size of hydrogel particles secondarily ground by the second cutter (160) becomes smaller than the diameter of the second through-holes (172), the hydrogel particles are discharged to the discharge space (104).

Meanwhile, since the rotation of screw (114), namely, transfer speed of hydrogel, is controlled by the first driving motor (110), and the rotation of the second cutter (160), namely, collision number of hydrogel with the second cutter (160), is controlled by the second driving motor (120), transfer speed of hydrogel and collision number of hydrogel with the second cutter (160) may be independently controlled. Preferably, the rotation speed of the first driving motor (110) corresponding to the transfer speed of hydrogel may be relatively slow, and the rotation speed of the second driving motor (120) corresponding to the collision number of hydrogel with the second cutter (160) may be relatively rapid. Namely, the rotation speed of the first driving motor (110) may be controlled to be slower than the rotation speed of the second driving motor (120). Thereby, collision number of hydrogel with the second cutter may be increased without increasing transfer speed of hydrogel.

For example, in order to make hydrogel particles smaller or increase sphericity of hydrogel particles, collision number of hydrogel with the second cutter (160) is increased by increasing the speed of the second driving motor (120). In this case, since the speed of the first driving motor (110) is not increased, transfer speed of hydrogel is not increased. Thus, since transfer speed of hydrogel to the cutting part is not increased, hydrogel is not accumulated in the cutting part. Thereby, while minimizing damage of hydrogel particles due to aggregation, hydrogel particles may be miniaturized and generation of fine particles may be reduced.

Further, since hydrogel particles may be miniaturized, subsequent grinding process may be omitted, and decrease in the absorption speed of particles may be prevented.

Although embodiment of the invention exemplifies using two driving motors, it is not necessarily limited thereto. For example, one driving motor may be connected to the first rotation shaft (112) through a first direction change means having a first gear ratio, and may be connected to the second rotation shaft (122) through a second direction change means having a second gear ratio. In this case, the first and second gear ratios may be set such that the rotation speed of the first rotation shaft (112) is relatively slow and the rotation speed of the second rotation shaft (122) is relatively rapid.

### (Example 1)

Polyacrylic acid absorbent polymer polymerized in a polymerization reactor was micronized with a micronizing apparatus (10) according to the embodiment of the invention. The diameter and thickness of the first through-holes (152), the diameter and thickness of the second through-holes (172), the number of ribs (174), the rotation speed of the first cutter (140) and the rotation speed of the second cutter (160) are as shown in Table 1.

**(Table 1)**

| | |
|---|---|
| Diameter and thickness of first through-holes | 4mm, 7mm |
| Diameter and thickness of second through-holes, and number of ribs | 4mm, 5mm, 4 |
| Rotation speed of first cutter | 100rpm |
| Rotation speed of second cutter | 1000rpm |

After micronizing with the micronizing apparatus (10), the generation of fine particles less than 150µm was measured, and as the result, about 8% of fine particles were generated. Wherein, generation of fine particles represents percentage of the mass of fine particles to the total mass of hydrogel introduced in the micronizing apparatus (10).

### (Comparative Example 1)

Polyacrylic acid absorbent polymer polymerized in a polymerization reactor by the same method as Example 1 was finely cut with the conventional chopper. The conventional chopper progressed transfer and fine cutting of hydrogel with one rotation shaft connected to one driving motor, and finely cut hydrogel particles passed through one hole plate and then were discharged to a discharge space. Wherein, the diameter and thickness of through-holes are respectively 8mm and 10mm, and the rotation speed of a cutter is 150rpm.

After fine cutting with the conventional chopper, generation of fine particles was measured, and as the result about 14% of fine particles were generated.

Thus, it can be seen that if micronizing is progressed with the micronizing apparatus (10) of Example 1, generation of fine particles decreases by about 42.9%, compared to the case of fine cutting with the chopper of Comparative Example 1.

### (Example 2)

Reassembled polyacrylic acid absorbent polymer was micronized with a micronizing apparatus (10) according to the embodiment of the invention. The diameter and thickness of the first through-holes (152), the diameter and thickness of the second through-holes (172), the number of ribs (174), the rotation speed of the first cutter (140) and the rotation speed of the second cutter (160) are as shown in Table 2.

**(Table 2)**

| | |
|---|---|
| Diameter and thickness of first through-holes | 8mm, 15mm |
| Diameter and thickness of second through-holes, and number of ribs | 4mm, 3mm, 4 |
| Rotation speed of first cutter | 160rpm |
| Rotation speed of second cutter | 1580rpm |

Since reassembled hydrogel has increased hardness, the diameter of the first through-holes, and the rotation speeds of the first and second cutters were increased, compared to Example 1.

After micronizing with the micronizing apparatus (10), generation of fine particles less than 150µm was measured, and as the result, about 9.4% of fine particles were generated.

### (Comparative Example 2)

Hydrogel reassembled by the same method as Example 2 was finely cut with the conventional chopper. The conventional chopper progressed transfer and fine cutting of hydrogel with one rotation shaft connected to one driving motor, and finely cut hydrogel particles passd through one hole plate and then were discharged to a discharge space. Wherein, the diameter and thickness of through-holes are respectively 20mm and 35mm, and the rotation speed of a cutter is 200rpm.

After fine cutting with the conventional chopper, generation of fine particles was measured, and as the result about 16.3% of fine particles were generated.

Thus, it can be seen that if micronization of reassembled hydrogel is progressed with the micronizing apparatus (10) of Example 2, generation of fine particles decreases by about 42.3%, compared to the case of fine cutting with the chopper of Comparative Example 2.

Although preferable embodiments of the invention have been explained, the invention is not limited to the embodiments, and includes all the modifications within a range easily modified from the embodiments of the invention by a person having ordinary knowledge in the art and recognized as being equivalent.

## Claims

1. A micronizing apparatus (10) for hydrogel of super absorbent polymer comprising:
a body (100) supplied with hydrogel or reassembled hydrogel through a hopper (102) formed at one side, and having a transfer space (106) formed inside of the body (100) for transferring the supplied hydrogel to the other side;
a first rotation shaft (112) rotatably disposed in the transfer space (106), and having a screw (114) formed on an outer circumferential surface so as to transfer the hydrogel from the one side to the other side;
a pre-cutter (130) fixedly installed to the body (100) at the other side of the screw (114), and having a plurality of pre-cutter holes (134) through which the hydrogel transferred by the screw (114) passes;
a first cutter (140) rotatably disposed at the other side of the pre-cutter (130) in the body (100), and connected to the first rotation shaft (112) so as to rotate together with the first rotation shaft (112) and primarily cut the hydrogel having passed through the pre-cutter holes (134); and
a first hole plate (150) fixedly installed to the body (100) at the other side of the first cutter (140), and having a plurality of first through-holes (152) through which the hydrogel primarily cut by the first cutter (140) passes,
**characterized in that**:
the micronizing apparatus (10) further comprises
a second rotation shaft (122) co-axially disposed with the first rotation shaft (112), and disposed so as to be rotatable independently from the first rotation shaft (112),
a second cutter (160) rotatably disposed at the other side of the first hole plate (150) in the body (100), and connected to the second rotation shaft (122) so as to rotate together with the second rotation shaft (122) and secondarily cut the hydrogel having passed through the first through-holes (152), and
a second hole plate (170) fixedly installed to the body (100) at the other side of the second cutter (160), and having a plurality of second through-holes (172) through which the hydrogel secondarily cut by the second cutter (160) passes.

2. The micronizing apparatus (10) for hydrogel of super absorbent polymer according to claim 1, further comprising:
a first driving motor (110) transferring a driving force to the first rotation shaft (112); and
a second driving motor (120) transferring a driving force to the second rotation shaft (122).

3. The micronizing apparatus (10) for hydrogel of super absorbent polymer according to claim 2, wherein
the first driving motor (110) is disposed at one side of the body (100) such that the first rotation shaft (112) penetrates through the surface of the one side of the body (100) and is connected to the first driving motor (110), and
the second driving motor (120) is disposed at the other side of the body (100) such that the second rotation shaft (122) penetrates through the surface of the other side of the body (100) and is connected to the second driving motor (120).

4. The micronizing apparatus (10) for hydrogel of super absorbent polymer according to claim 1, wherein a rotation speed of the second rotation shaft (122) is greater than a rotation speed of the first rotation shaft (112).

5. The micronizing apparatus (10) for hydrogel of super absorbent polymer according to claim 1, wherein a rotation speed of the first rotation shaft (112) is 100rpm ~ 300rpm, and a rotation speed of the second rotation shaft (122) is 1000rpm ~ 1750rpm.

6. The micronizing apparatus (10) for hydrogel of super absorbent polymer according to claim 1, wherein a diameter of the second through-hole (172) is equal to or less than a diameter of the first through-hole (152).

7. The micronizing apparatus (10) for hydrogel of super absorbent polymer according to claim 6, wherein the diameter of the first through-hole (152) is 3mm ~ 20mm, and the diameter of the second through-hole (172) is 3mm ~ 16mm.

8. The micronizing apparatus (10) for hydrogel of super absorbent polymer according to claim 1, wherein a thickness of the second hole plate (170) is smaller than a thickness of the first hole plate (150).

9. The micronizing apparatus (10) for hydrogel of super absorbent polymer according to claim 8, wherein the second hole plate (170) is equipped with at least one rib (174) so as to reinforce rigidity of the second hole plate (170).

10. The micronizing apparatus (10) for hydrogel of super absorbent polymer according to claim 8, wherein the thickness of the first hole plate (150) is 7mm ~ 35mm, and the thickness of the second hole plate (170) is 3mm ~ 10mm.

## Patentansprüche

1. Mikronisierungsvorrichtung (10) für ein Hydrogel aus einem superabsorbierenden Polymer, umfassend:
einen Körper (100), welcher durch einen Behälter (102), welcher an einer Seite gebildet ist, mit Hydrogel oder erneut angesammeltem Hydrogel beliefert wird, und welcher einen Übertragungsraum (106), welcher im Inneren des Körpers (100) gebildet ist, zum Übertragen des gelieferten Hydrogels an die andere Seite aufweist;
eine erste Drehwelle (112), welche drehbar in dem Übertragungsraum (106) angeordnet ist und welche eine Schnecke (114) aufweist, welche an einer äußeren Umfangsfläche gebildet ist, um das Hydrogel von der einen Seite zu der anderen Seite zu übertragen;
eine Vorschneideinheit (130), welche an dem Körper (100) fest an der anderen Seite der Schnecke (114) installiert ist und welche eine Mehrzahl von Vorschneideinheit-Löchern (134) aufweist, durch welche das Hydrogel passiert, welches durch die Schnecke (114) übertragen wird;
eine erste Schneideinheit (140), welche in dem Körper (100) drehbar an der anderen Seite der Vorschneideinheit (130) angeordnet ist und welche mit der ersten Drehwelle (112) verbunden ist, um sich zusammen mit der ersten Drehwelle (112) zu drehen und das Hydrogel primär zu schneiden, welches durch die Vorschneideinheit-Löcher (134) passiert ist; und
eine erste Lochplatte (150), welche an der anderen Seite der ersten Schneideinheit (140) fest an dem Körper (100) installiert ist und welche eine Mehrzahl erster Durchgangslöcher (152) aufweist, durch welche das Hydrogel passiert, welches durch die erste Schneideinheit (140) primär geschnitten worden ist,
**dadurch gekennzeichnet, dass**:
die Mikronisierungsvorrichtung (10) ferner umfasst:
eine zweite Drehwelle (122), welche koaxial zu der ersten Drehwelle (112) angeordnet ist und welche derart angeordnet ist, dass sie unabhängig von der ersten Drehwelle (112) drehbar ist,
eine zweite Schneideinheit (160), welche in dem Körper (100) drehbar an der anderen Seite der ersten Lochplatte (150) angeordnet ist und welche mit der zweiten Drehwelle (122) verbunden ist, um sich zusammen mit der Drehwelle (122) zu drehen und das Hydrogel sekundär zu schneiden, welches durch die Durchgangslöcher (152) passiert ist, und
eine zweite Lochplatte (170), welche an der anderen Seite der zweiten Schneideinheit (160) fest an dem Körper installiert ist und welche eine Mehrzahl zweiter Durchgangslöcher (172) aufweist, durch welche das Hydrogel passiert, welches durch die zweite Schneideinheit (160) sekundär geschnitten worden ist.

2. Mikronisierungsvorrichtung (10) für ein Hydrogel aus einem superabsorbierenden Polymer nach Anspruch 1, ferner umfassend:
einen ersten Antriebsmotor (110), welcher eine Antriebskraft auf die erste Drehwelle (112) überträgt; und
einen zweiten Antriebsmotor (120), welcher eine Antriebskraft auf die zweite Drehwelle (122) überträgt.

3. Mikronisierungsvorrichtung (10) für ein Hydrogel aus einem superabsorbierenden Polymer nach Anspruch 2, wobei:
der erste Antriebsmotor (110) derart an einer Seite des Körpers (100) angeordnet ist, dass die erste Drehwelle (112) durch die Fläche der einen Seite des Körpers (100) dringt und mit dem ersten Antriebsmotor (110) verbunden ist, und
der zweite Antriebsmotor (120) derart an der anderen Seite des Körpers (100) angeordnet ist, dass die zweite Drehwelle (122) durch die Fläche der anderen Seite des Körpers (100) dringt und mit dem zweiten Antriebsmotor (120) verbunden ist.

4. Mikronisierungsvorrichtung (10) für ein Hydrogel aus einem superabsorbierenden Polymer nach Anspruch 1, wobei eine Drehgeschwindigkeit der zweiten Drehwelle (122) größer als eine Drehgeschwindigkeit der ersten Drehwelle (112) ist.

5. Mikronisierungsvorrichtung (10) für ein Hydrogel aus einem superabsorbierenden Polymer nach Anspruch 1, wobei eine Drehgeschwindigkeit der ersten Drehwelle (112) 100 rpm - 300 rpm beträgt, und wobei eine Drehgeschwindigkeit der zweiten Drehwelle (122) 1000 rpm - 1750 rpm beträgt.

6. Mikronisierungsvorrichtung (10) für ein Hydrogel aus einem superabsorbierenden Polymer nach Anspruch 1, wobei ein Durchmesser des zweiten Durchgangslochs (172) gleich wie oder kleiner als ein Durchmesser des ersten Durchgangslochs (152) ist.

7. Mikronisierungsvorrichtung (10) für ein Hydrogel aus einem superabsorbierenden Polymer nach Anspruch 6, wobei der Durchmesser des ersten Durchgangslochs (1529 3 mm - 20 mm beträgt, und wobei der Durchmesser des zweiten Durchgangslochs (172) 3 mm - 16 mm beträgt.

8. Mikronisierungsvorrichtung (10) für ein Hydrogel aus einem superabsorbierenden Polymer nach Anspruch 1, wobei eine Dicke der zweiten Lochplatte (170) kleiner als eine Dicke der ersten Lochplatte (150) ist.

9. Mikronisierungsvorrichtung (10) für ein Hydrogel aus einem superabsorbierenden Polymer nach Anspruch 8, wobei die zweite Lochplatte (170) mit wenigstens einer Rippe (174) ausgerüstet ist, um die Festigkeit der zweiten Lochplatte (170) zu verstärken.

10. Mikronisierungsvorrichtung (10) für ein Hydrogel aus einem superabsorbierenden Polymer nach Anspruch 8, wobei die Dicke der ersten Lochplatte (150) 7 mm - 35 mm beträgt, und wobei die Dicke der zweiten Lochplatte (170) 3 mm - 10 mm beträgt.

## Revendications

1. Appareil de micronisation (10) pour hydrogel de polymère superabsorbant comprenant :
un corps (100) alimenté en hydrogel ou hydrogel réassemblé à travers une trémie (102) formée au niveau d'un côté, et ayant un espace de transfert (106) formé à l'intérieur du corps (100) pour transférer l'hydrogel fourni vers l'autre côté ;
un premier arbre de rotation (112) disposé en rotation dans l'espace de transfert (106), et présentant une vis (114) formée sur une surface circonférentielle externe afin de transférer l'hydrogel dudit un côté à l'autre côté ;
un prédécoupeur (130) installé de manière fixe sur le corps (100) de l'autre côté de la vis (114), et ayant une pluralité de trous de prédécoupeur (134) à travers lesquels passe l'hydrogel transféré par la vis (114) ;
un premier découpeur (140) disposé en rotation de l'autre côté du prédécoupeur (130) dans le corps (100), et relié au premier arbre de rotation (112) de façon à tourner conjointement avec le premier arbre de rotation (112) et à découper principalement l'hydrogel ayant traversé les trous de prédécoupeur (134) ; et
une première plaque perforée (150) installée de manière fixe sur le corps (100) de l'autre côté du premier découpeur (140), et ayant une pluralité de premiers trous traversants (152) à travers lesquels passe l'hydrogel principalement découpé par le premier découpeur (140),
**caractérisé en ce que** :
l'appareil de micronisation (10) comprend en outre
un deuxième arbre de rotation (122) disposé coaxialement par rapport au premier arbre de rotation (112), et disposé de façon à être rotatif indépendamment du premier arbre de rotation (112),
un deuxième découpeur (160) disposé en rotation de l'autre côté de la première plaque perforée (150) dans le corps (100), et relié au deuxième arbre de rotation (122) de manière à tourner conjointement avec le deuxième arbre de rotation (122) et à découper secondairement l'hydrogel ayant traversé les premiers trous traversants (152), et
une deuxième plaque perforée (170) installée de manière fixe sur le corps (100) de l'autre côté du deuxième découpeur (160), et ayant une pluralité de trous traversants (172) à travers lesquels passe l'hydrogel découpé secondairement par le deuxième découpeur (160).

2. Appareil de micronisation (10) pour hydrogel de polymère superabsorbant selon la revendication 1, comprenant en outre :
un premier moteur d'entraînement (110) transférant une force d'entraînement au premier arbre de rotation (112) ; et
un deuxième moteur d'entraînement (120) transférant une force d'entraînement au deuxième arbre de rotation (122).

3. Appareil de micronisation (10) pour hydrogel de polymère superabsorbant selon la revendication 2, dans lequel
le premier moteur d'entraînement (110) est disposé au niveau d'un côté du corps (100) de sorte que le premier arbre de rotation (112) pénètre à travers la surface dudit un côté du corps (100) et est relié au premier moteur d'entraînement (110), et
le deuxième moteur d'entraînement (120) est situé de l'autre côté du corps (100), de sorte que le deuxième arbre de rotation (122) pénètre à travers la surface de l'autre côté du corps (100) et est relié au deuxième moteur d'entraînement (120).

4. Appareil de micronisation (10) pour hydrogel de polymère superabsorbant selon la revendication 1, dans lequel une vitesse de rotation du deuxième arbre de rotation (122) est supérieure à une vitesse de rotation du premier arbre de rotation (112).

5. Appareil de micronisation (10) pour hydrogel de polymère superabsorbant selon la revendication 1, dans lequel une vitesse de rotation du premier arbre de rotation (112) est de 100 tr/min à 300 tr/min, et une vitesse de rotation du deuxième arbre de rotation (122) est de 1 000 tr/min à 1 750 tr/min.

6. Appareil de micronisation (10) pour hydrogel de polymère superabsorbant selon la revendication 1, dans lequel un diamètre du deuxième trou traversant (172) est égal ou inférieur à un diamètre du premier trou traversant (152).

7. Appareil de micronisation (10) pour hydrogel de polymère superabsorbant selon la revendication 6, dans lequel le diamètre du premier trou traversant (152) est de 3 mm à 20 mm, et le diamètre du deuxième trou traversant (172) est de 3 mm à 16 mm.

8. Appareil de micronisation (10) pour hydrogel de polymère superabsorbant selon la revendication 1, dans lequel une épaisseur de la deuxième plaque perforée (170) est plus petite qu'une épaisseur de la première plaque perforée (150).

9. Appareil de micronisation (10) pour hydrogel de polymère superabsorbant selon la revendication 8, dans lequel la deuxième plaque perforée (170) est équipée d'au moins une nervure (174) de façon à renforcer la rigidité de la deuxième plaque perforée (170).

10. Appareil de micronisation (10) pour hydrogel de polymère superabsorbant selon la revendication 8, dans lequel l'épaisseur de la première plaque perforée (150) est de 7 mm à 35 mm, et l'épaisseur de la deuxième plaque perforée (170) est de 3 mm à 10 mm.
